# FASCICULE DE BREVET EUROPEEN

(11) **EP 3 052 928 B1**
(45) Date de publication et mention de la délivrance du brevet: **11.12.2024**
(21) Numéro de dépôt: 14789318.4
(22) Date de dépôt: 29.09.2014
(51) Int. Cl.: G01N 27/12, G01N 27/406, H05B 3/20, G01N 27/407, G01N 27/22

(54) **CAPTEUR DE GAZ À COUCHE SENSIBLE CHAUFFÉE**
GAS SENSOR MIT BEHEIZTEM SENSORSCHICHT
GAS SENSOR WITH HEATED SENSING LAYER

(30) Priorité: 01.10.2013 FR 1359494
(43) Date de publication de la demande: 10.08.2016
(60) Demande divisionnaire: 20210986.4
(73) Titulaire: Université d'Aix Marseille, 13284 Marseille Cedex 07 (FR); Centre National de la Recherche Scientifique, 75016 Paris (FR)
(72) Inventeur: AGUIR, Khalifa, F-13191 Allauch (FR); BENDAHAN, Marc, F-13380 Plan de Cuques (FR); LAITHIER MARTINI, Virginie Marie, F-13008 Marseille (FR)
(74) Mandataire: de Jong, Jean Jacques
(86) Numéro de dépôt international: PCT/FR2014/052445
(87) Numéro de publication internationale: WO 2015/049445

(56) Documents cités:
- WO-A2-2006/005332
- DE-A1- 102005 057 566
- US-A- 6 012 327
- US-A1- 2004 075 528
- US-A1- 2004 124 713
- US-A1- 2006 170 015
- US-A1- 2007 254 812
- US-A1- 2008 123 066
- US-A1- 2008 264 146
- US-A1- 2009 217 737
- US-A1- 2011 203 348

## Description

### Domaine technique de l'invention

L'invention est relative aux capteurs de molécules, notamment de gaz, fonctionnant avec une couche sensible chauffée.

### État de la technique

La couche sensible de ce type de capteur comprend généralement un oxyde semi-conducteur dont la nature et la température de fonctionnement sont choisies en fonction des molécules à détecter. La résistivité de la couche sensible varie en fonction de la concentration de molécules adsorbées par la couche d'oxyde.

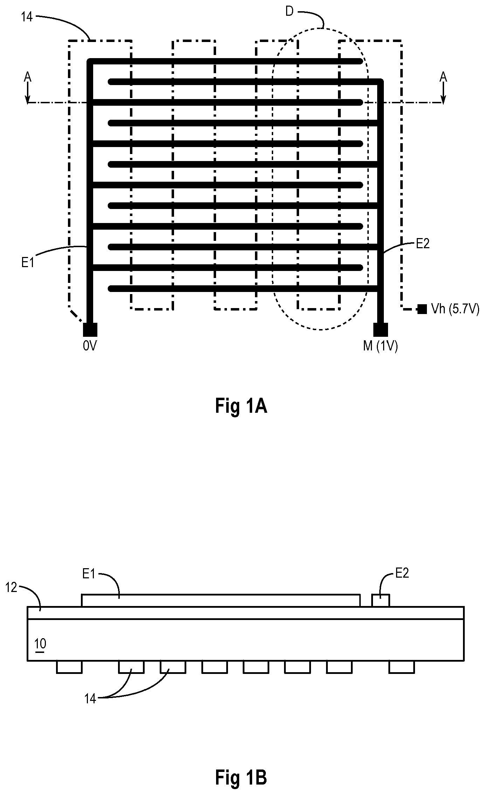

Les figures 1A et 1B représentent schématiquement une vue de dessus et une vue en coupe selon un axe AA d'un capteur à couche sensible chauffée classique, du type décrit, par exemple, dans les articles [I Dewa Putu Hermida et al., « Development Of Co Gas Sensing Based SnO2 Thin Film », International Journal of Engineering & Technology IJET-IJENS Vol: 13 No: 01] et [George F. Fine et al., « Metal Oxide Semi-Conductor Gas Sensors in Environmental Monitoring », Sensors 2010, 10, 5469-5502].

Le capteur comprend un substrat isolant 10 portant sur sa face supérieure une couche sensible 12, à base d'oxyde semi-conducteur. Deux électrodes complémentaires, sous la forme de pistes conductrices E1 et E2, sont disposées en contact électrique avec la couche sensible 12. Les électrodes E1 et E2 sont configurées pour mesurer les variations de résistivité des zones de la couche sensible situées entre les électrodes. Pour améliorer la sensibilité, on cherche à maximiser les longueurs en regard des deux électrodes. Pour cela, les pistes des électrodes sont souvent réalisées sous forme de peignes interdigités, comme cela est représenté.

Chacune des électrodes comprend une borne de contact disposée à la périphérie du capteur, hors de la zone active de la couche sensible. La borne de l'électrode E1 est mise à un potentiel de masse (0 V), et la borne de l'électrode E2 est mise à un potentiel de mesure M, de l'ordre de 1 V. Le capteur est exploité en mesurant le courant circulant entre les bornes des deux électrodes.

Pour chauffer la couche sensible 12, on prévoit une piste résistive 14 isolée électriquement de la couche sensible, disposée par exemple sur la face inférieure du substrat 10. La piste 14 est configurée pour échauffer uniformément la zone active de la couche sensible, c'est-à-dire l'ensemble des zones situées entre des doigts en regard des électrodes. La piste 14 est souvent sous forme de serpentin, comme cela est représenté.

Elle est alimentée entre la masse (0 V) et un potentiel Vh régulé en fonction de la température souhaitée.

La structure d'un capteur à couche sensible chauffée et les matériaux utilisés se prêtent particulièrement bien à une fabrication selon les technologies de la microélectronique utilisées pour les circuits intégrés. Les dimensions du capteur sont alors tellement petites que l'on peut chauffer la couche sensible jusqu'à 350°C avec une consommation de seulement 30 mW. On constate néanmoins que les couches sensibles de tels capteurs vieillissent plus vite que dans des capteurs réalisés selon d'autres technologies.

Les demandes de brevet US2009/217737A1 et US6012327A divulguent des capteurs de molécules à couche sensible chauffée comprenant un substrat isolant portant la couche sensible ; deux électrodes de mesure complémentaires sous la forme de deux pistes conductrices adjacentes agencées en contact électrique avec la couche sensible ; et un élément chauffant sous la forme d'une piste résistive agencée sur le substrat pour pouvoir chauffer une zone active de la couche sensible.

### Résumé de l'invention

On souhaite ainsi rallonger la durée de vie d'un capteur à couche sensible chauffée, réalisé selon les technologies des circuits intégrés.

On tend à satisfaire ce besoin en prévoyant un capteur de molécules à couche sensible chauffée, comprenant un substrat isolant portant la couche sensible ; deux électrodes de mesure complémentaires sous la forme de deux pistes conductrices adjacentes agencées en contact électrique avec la couche sensible ; et un élément chauffant sous la forme d'une piste résistive agencée sur le substrat pour pouvoir chauffer uniformément une zone active de la couche sensible. La piste résistive comprend au moins trois points d'alimentation régulièrement espacés sur la longueur de la piste résistive, et chaque point de rang pair est alimenté à un premier potentiel d'alimentation et chaque point de rang impair est alimenté à un deuxième potentiel d'alimentation,

Le capteur de molécules à couche sensible chauffée selon l'invention est défini dans la revendication indépendante 1.

Selon un mode de réalisation, le tracé des pistes conductrices des électrodes, projeté sur le plan de la piste résistive, reste en dehors d'une marge définie autour de la piste résistive.

Selon un mode de réalisation, la piste résistive et les pistes conductrices des électrodes sont coplanaires.

Selon un mode de réalisation, les changements de direction de la piste résistive et des pistes conductrices des électrodes dans la zone active de la couche sensible ont un rayon de courbure non nul.

Selon un mode de réalisation, la piste résistive comprend des arcs successifs en forme de « U », et les deux pistes conductrices suivent parallèlement la piste résistive en pénétrant dans chaque arc, la piste conductrice la plus éloignée de la piste résistive s'arrêtant en sortant de l'arc, et la piste conductrice adjacente à la piste résistive faisant, en sortant de l'arc, un demi-tour autour de l'extrémité de la piste conductrice la plus éloignée de la piste résistive pour pénétrer de nouveau dans l'arc.

Selon un mode de réalisation, la piste résistive est coplanaire avec les pistes conductrices et également en contact électrique avec la couche sensible, la piste conductrice adjacente à la piste résistive étant mise à un potentiel de masse de sorte que tout courant circulant dans la couche sensible entre la piste résistive et la piste conductrice adjacente ne perturbe pas le courant circulant entre les pistes conductrices.

### Description sommaire des dessins

Des modes de réalisation seront exposés dans la description suivante, faite à titre non limitatif en relation avec les figures jointes parmi lesquelles :
- les figures 1A et 1B, précédemment décrites, représentent schématiquement une vue de dessus et une vue en coupe d'un capteur à couche sensible chauffée classique ;
- la figure 2 représente schématiquement un mode de réalisation de piste résistive d'un élément chauffant de capteur, permettant d'augmenter la durée de vie du capteur ;
- la figure 3 représente schématiquement un autre mode de réalisation de piste résistive et un mode de réalisation d'électrodes adaptées ; et
- la figure 4 illustre une technique de mise en série de plusieurs structures du type de la figure 3.

### Description d'un mode de réalisation préféré de l'invention

Les inventeurs ont constaté que la couche sensible d'un capteur chauffé de petites dimensions, notamment lorsque le capteur est réalisé selon une technologie de fabrication des circuits intégrés, se détériorait principalement du côté du potentiel le plus élevé (Vh) alimentant la piste résistive, dans une zone D représentée sur la figure 1A. Les inventeurs attribuent cet effet au champ électrique subi par la couche sensible. En effet, le potentiel Vh d'alimentation de la piste résistive est relativement élevé, pouvant atteindre 5,7 V, et la distance entre la piste résistive et les pistes conductrices des électrodes peut être particulièrement faible dans les technologies des circuits intégrés, de sorte qu'il règne un champ électrique intense à chaque croisement d'une électrode et de la piste résistive, du côté où la piste résistive est au potentiel le plus élevé. C'est en effet au niveau de ces croisements de piste que l'on constate les premières détériorations de la couche sensible.

Pour éviter cette détérioration liée au champ électrique, le fait d'éloigner la piste résistive des électrodes ne résout pas le problème, car l'efficacité de chauffage diminuerait et exigerait une augmentation du potentiel d'alimentation de la piste résistive.

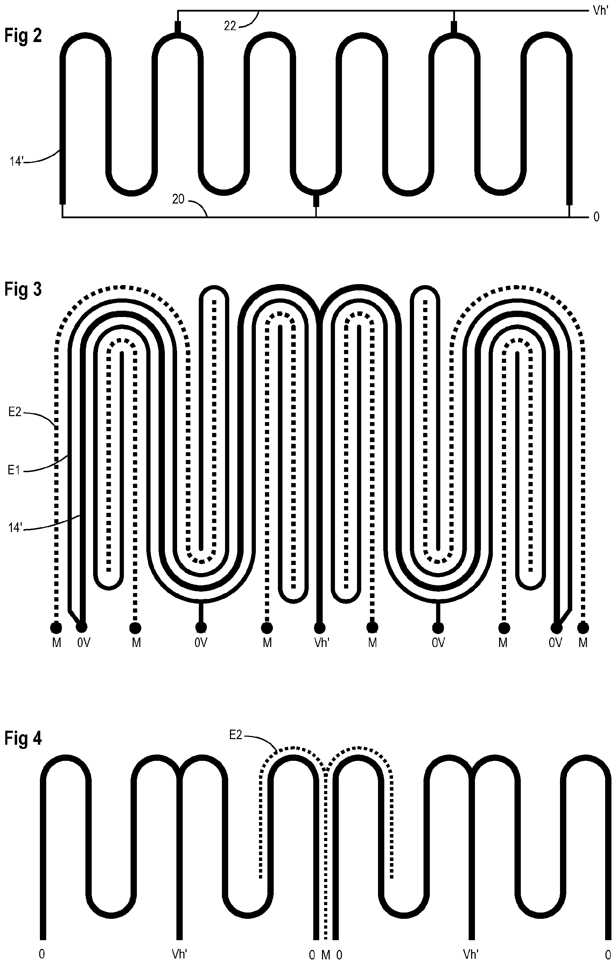

La figure 2 représente schématiquement une configuration de piste résistive 14' de l'élément de chauffage, permettant de diminuer le champ électrique sans diminuer l'efficacité de chauffage. La piste résistive, ici en forme de serpentin, comprend, outre les bornes d'alimentation extrêmes, un ou plusieurs points d'alimentation intermédiaires régulièrement espacés sur la longueur de la piste résistive. Dans la figure 2, la piste résistive comprend trois points d'alimentation intermédiaires, à titre d'exemple, donc cinq points d'alimentation en comptant les bornes extrêmes. Les points de rang impair sont alimentés par le premier des potentiels d'alimentation, par exemple la masse (0 V), et les points de rang pair sont alimentés par le deuxième potentiel d'alimentation, le potentiel haut Vh'. Pour cela, les points de rang impair peuvent être connectés à une ligne de faible résistivité commune 20 alimentée par le premier potentiel, et les points de rang pair peuvent être connectés à une ligne de faible résistivité commune 22 alimentée par le deuxième potentiel.

Avec la configuration représentée, le potentiel Vh' peut être divisé par 4 par rapport au potentiel Vh requis avec seulement deux bornes d'alimentation, tout en fournissant la même puissance de chauffage. En effet, chaque segment du serpentin présente un quart de la résistance totale et voit à ses bornes un quart de la tension d'alimentation classique : le courant est inchangé par rapport à la configuration classique, donc la puissance dissipée est la même. Le champ électrique peut ainsi être divisé par le nombre de segments utilisés dans la piste résistive.

Pour simplifier la fabrication du capteur on souhaite réaliser les pistes des électrodes et la piste résistive de manière coplanaire. Cela permet de les former avec un seul niveau de masque. Dans ce cas, comme cela est représenté à la figure 2, il est préférable que les bornes d'alimentation soient situées sur les bords du capteur, pour éviter de tracer des pistes d'alimentation qui traversent la zone active du capteur ou de placer des vias dans cette zone. Les bornes d'alimentation peuvent ensuite être reliées à des pistes métalliques et des vias disposées hors de la zone active du capteur.

La figure 3 représente schématiquement un autre mode de réalisation de capteur. La piste résistive 14' comporte ici deux segments en serpentin qui sont symétriques par rapport à un axe vertical passant par le point d'alimentation central, ici porté au potentiel Vh'. Si chaque segment a un nombre impair d'arcs, comme cela est représenté, les points d'alimentation extrêmes, ici à 0 V, sont situés sur le même bord du capteur que le point central.

Avec cette configuration, le tronçon central de la piste résistive véhicule le courant pour chacun des deux segments, et voit donc deux fois plus de courant que chacun des segments. Si le tronçon central a la même résistivité que le reste de la piste résistive, il dissipe quatre fois plus de puissance que le reste. Pour uniformiser la puissance de chauffe, le tronçon central peut être dimensionné pour présenter le quart de la résistivité du reste de la piste.

La figure 3 représente également un exemple de configuration du tracé des électrodes E1 et E2 permettant de réaliser les électrodes dans le même plan que la piste résistive 14'. Ce tracé des électrodes est en outre configuré pour réduire davantage les champs électriques subis par la couche sensible.

Les tracés classiques des électrodes, comme celui représenté à la figure 1B, présentent de nombreux changements de direction ayant des rayons de courbure proches de zéro. Il en résulte des accentuations locales du champ électrique au niveau de chaque changement de direction.

Pour diminuer cet effet, comme cela est représenté à la figure 3, les changements de direction des pistes des électrodes E1, E2, et de la piste résistive 14' se font selon des rayons de courbure non-nuls, par exemple selon des arcs de cercle. Le serpentin de la piste résistive 14' peut être formé d'une succession d'arcs en forme de « U ». Pour les électrodes, on cherche également à éviter des tracés en forme de peigne, présentant de nombreux angles droits et d'extrémités aigües. Ainsi, les pistes des deux électrodes E1, E2 suivent parallèlement la piste résistive 14' en pénétrant dans chaque arc. En sortant de l'arc, l'électrode la plus éloignée de la piste résistive, ici E2, s'arrête, tandis que l'électrode adjacente à la piste résistive, ici E1, fait un demi-tour autour de l'extrémité de l'électrode E2 pour pénétrer de nouveau dans l'arc. Ce tracé permet de maximiser la longueur en regard des électrodes sans utiliser des motifs en peigne.

Avec cette technique de tracé des électrodes, on forme une paire de pistes d'électrodes E1, E2 pour chaque arc du serpentin. Le point de départ de chaque piste de la paire est connecté sur une borne au bord du capteur, à partir de laquelle la piste peut être alimentée et reliée aux pistes homologues des autres arcs, le cas échéant par des vias, en dehors de la zone active du capteur.

Au début de la piste résistive 14', comme cela est représenté, une paire d'électrodes E1, E2 démarre sur le même bord que la piste résistive et suit le premier arc parallèlement de l'extérieur jusqu'à l'arc suivant, où le motif décrit ci-dessus est commencé. Le motif au niveau de la fin de la piste résistive est symétrique.

La configuration de la figure 3 permet de réaliser les pistes des électrodes et la piste résistive dans un même plan en contact avec la couche sensible. La piste résistive 14', si elle est en contact électrique avec la couche sensible, pourrait générer des courants parasites dans la couche sensible qui perturberaient la mesure effectuée par les électrodes.

Pour éviter cela, on pourrait déposer entre la couche sensible et la piste résistive un isolant local, ou bien déposer la couche sensible de manière locale sur les électrodes. Cela nuirait à l'efficacité de chauffage de la couche sensible.

La configuration d'alimentation des électrodes représentée à la figure 3 permet d'éviter l'effet de courants parasites générés par la piste résistive lorsqu'elle est en contact électrique avec la couche sensible. Les pistes d'électrode E1 adjacentes à la piste résistive sont mises à la masse (0 V) tandis que les pistes d'électrode E2 les plus éloignées sont alimentées au potentiel de mesure M. Alors tout courant tendant à circuler dans la couche sensible entre les pistes d'électrode E1 et la piste résistive 14' passe par la masse et ne parvient pas aux pistes d'électrode E2.

Dans ces conditions, la configuration de la figure 3 peut être utilisée indifféremment avec une couche sensible déposée en dessous ou au-dessus. On préfère que la couche sensible soit au-dessus, car elle expose alors une surface maximale au milieu ambiant.

La configuration de la figure 3 peut être utilisée dans une structure plus traditionnelle, avec la piste résistive 14' disposée dans un plan différent de celui des électrodes El, E2. Elle garde son intérêt de la diminution des champs électriques. Les proportions et la position de la piste résistive et des électrodes sont gardées, de sorte que le tracé des pistes des électrodes, projeté sur le plan de la piste résistive, reste en dehors d'une marge définie autour de la piste résistive - en d'autres termes on évite de croiser les pistes des électrodes avec la piste résistive dans la zone active du capteur.

La figure 4 illustre un exemple de technique de mise en série de plusieurs structures du type de la figure 3. Deux structures du type de la figure 3 peuvent être mises bout à bout en mettant en commun un tronçon latéral de l'électrode E2. On parvient ainsi à diminuer la tension d'alimentation Vh' de la piste résistive par un facteur égal au nombre de segments, selon les besoins de l'application envisagée.

Cette configuration permet d'utiliser toute la structure sous la forme d'un seul capteur, en reliant les différentes structures ensemble, ou bien d'utiliser les différentes structures de manière séparée et avoir ainsi une configuration « multicapteurs », permettant de disposer de plusieurs signaux différents (en rapport avec la température de chaque serpentin par exemple) et de réaliser un dispositif de type « nez électronique ».

## Revendications

1. Capteur de molécules à couche sensible chauffée réalisé selon une technologie de fabrication des circuits intégrés, comprenant :
• un substrat isolant (10) portant la couche sensible (12) ;
• deux électrodes de mesure complémentaires (E1, E2) sous la forme de deux pistes conductrices adjacentes agencées en contact électrique avec la couche sensible (12) ; et
• un élément chauffant (14) sous la forme d'une piste résistive agencée sur le substrat pour pouvoir chauffer uniformément une zone active de la couche sensible,
le capteur étant **caractérisé en ce que**:
la piste résistive comprend au moins trois points d'alimentation régulièrement espacés sur la longueur de la piste, et **en ce qu'**il comprend :
• une première ligne d'alimentation commune (20) connectée aux points de rang impair de la piste résistive ;
• une deuxième ligne d'alimentation commune (22) connectée aux points de rang pair de la piste résistive ; et
• une source d'alimentation (Vh') configurée pour appliquer entre les première et deuxième lignes d'alimentation communes une tension d'au plus 5,7 volts divisée par le nombre de segments définis entre les points d'alimentation

2. Capteur selon la revendication 1, dans lequel le tracé des pistes conductrices des électrodes, projeté sur le plan de la piste résistive, reste en dehors d'une marge définie autour de la piste résistive.

3. Capteur selon la revendication 2, dans lequel la piste résistive et les pistes conductrices des électrodes sont coplanaires.

4. Capteur selon la revendication 2, dans lequel les changements de direction de la piste résistive et des pistes conductrices des électrodes dans la zone active de la couche sensible ont un rayon de courbure non nul.

5. Capteur selon la revendication 4, dans lequel la piste résistive comprend des arcs successifs en forme de « U », et les deux pistes conductrices suivent parallèlement la piste résistive en pénétrant dans chaque arc, la piste conductrice la plus éloignée de la piste résistive s'arrêtant en sortant de l'arc, et la piste conductrice adjacente à la piste résistive faisant, en sortant de l'arc, un demi-tour autour de l'extrémité de la piste conductrice la plus éloignée de la piste résistive pour pénétrer de nouveau dans l'arc.

6. Capteur selon la revendication 5, dans lequel la piste résistive est coplanaire avec les pistes conductrices et également en contact électrique avec la couche sensible, la piste conductrice adjacente à la piste résistive étant mise à un potentiel de masse de sorte que tout courant circulant dans la couche sensible entre la piste résistive et la piste conductrice adjacente ne perturbe pas le courant circulant entre les pistes conductrices.

## Patentansprüche

1. Molekülsensor mit erhitzter empfindlicher Schicht, gefertigt gemäß einer Technologie für eine Herstellung integrierter Schaltungen, umfassend:
• ein isolierendes Substrat (10), das die empfindliche Schicht (12) trägt;
• zwei komplementäre Messelektroden (E1, E2) in Form von zwei angrenzenden Leiterbahnen, die in elektrischem Kontakt mit der empfindlichen Schicht (12) angeordnet sind; und
• ein Heizelement (14) in Form einer Widerstandsbahn, die auf dem Substrat angeordnet ist, um einen aktiven Bereich der empfindlichen Schicht gleichmäßig erhitzen zu können, wobei der Sensor **dadurch gekennzeichnet ist, dass:**
die Widerstandsbahn mindestens drei Einspeisungspunkte, die entlang der Länge der Bahn gleichmäßig beabstandet sind, umfasst, und dadurch, dass er umfasst:
• eine erste gemeinsame Einspeisungsleitung (20), die mit den Punkten ungeraden Rangs der Widerstandsbahn verbunden ist;
• eine zweite gemeinsame Einspeisungsleitung (22), die mit den Punkten geraden Rangs der Widerstandsbahn verbunden ist; und
• eine Einspeisungsquelle (Vh'), die zum Anwenden, zwischen der gemeinsamen ersten und zweiten Einspeisungsleitung, einer Spannung von höchstens 5,7 Volt, geteilt durch die Anzahl von Segmenten, die zwischen den Einspeisungspunkten definiert sind, konfiguriert ist.

2. Sensor nach Anspruch 1, wobei der Verlauf der Leiterbahnen der Elektroden, projiziert auf die Ebene der Widerstandsbahn, außerhalb eines Rands bleibt, der um die Widerstandsbahn herum definiert ist.

3. Sensor nach Anspruch 2, wobei die Widerstandsbahn und die Leiterbahnen der Elektroden koplanar sind.

4. Sensor nach Anspruch 2, wobei die Richtungsänderungen der Widerstandsbahn und der Leiterbahnen der Elektroden in dem aktiven Bereich der empfindlichen Schicht einen Krümmungsradius ungleich Null aufweisen.

5. Sensor nach Anspruch 4, wobei die Widerstandsbahn aufeinanderfolgende Bögen in "U"-Form umfasst und die zwei Leiterbahnen der Widerstandsbahn parallel folgen, indem sie jeden Bogen durchdringen, wobei die Leiterbahn, die am weitesten von der Widerstandsbahn entfernt ist, bei Austreten aus dem Bogen anhält und die Leiterbahn, die an die Widerstandsbahn angrenzt, bei Austreten aus dem Bogen eine halbe Umdrehung um das Ende der Leiterbahn, die am weitesten von der Widerstandsbahn entfernt ist, macht, um wieder in den Bogen einzudringen.

6. Sensor nach Anspruch 5, wobei die Widerstandsbahn koplanar mit den Leiterbahnen ist und ebenfalls in elektrischem Kontakt mit der empfindlichen Schicht steht, wobei die Leiterbahn, die an die Widerstandsbahn angrenzt, auf Erdpotential gebracht wird, sodass jeglicher Strom, der in der empfindlichen Schicht zwischen der Widerstandsbahn und der angrenzenden Leiterbahn fließt, den Strom, der zwischen den Leiterbahnen fließt, nicht stört.

## Claims

1. A heated sensitive molecule layer sensor made according to an integrated circuit manufacturing technology, comprising:
• an insulating substrate (10) bearing the sensitive layer (12);
• two complementary measurement electrodes (E1, E2) in the form of two adjacent conductive tracks configured in electrical contact with the sensitive layer (12); and
• a heating element (14) in the form of a resistive track arranged on the substrate for uniformly heating an active area of the sensitive layer; the sensor being **characterized in that**
the resistive track comprises at least three power supply points regularly spaced over the length of the resistive track,
and comprising
• a first common supply line (20) connected to the points of odd rank of the resistive track;
• a second common supply line (22) connected to the points of even rank of the resistive track; and
• a supply voltage (Vh') configured to apply between the first and the second common supply lines a voltage at most equal to 5.7 volts divided by a number of segments defined between the power supply points.

2. The sensor of claim 1, wherein the layout of the conductive tracks of the electrodes, projected onto the plane of the resistive track, remains outside a margin defined around the resistive track.

3. The sensor of claim 2, wherein the resistive track and the conductive tracks of the electrodes are coplanar.

4. The sensor of claim 2, wherein the direction changes of the resistive track and the conductive tracks of the electrodes in the active area of the sensitive layer have a non-zero curvature radius.

5. The sensor of claim 4, wherein the resistive track comprises successive U-shaped arcs and the two conductive tracks run parallel to the resistive track, entering each arc with the conductive track remotest from the resistive track ending when exiting the arc, and the conductive track adjacent the resistive track forming, upon exiting the arc, a U-turn around the end of the remotest conductive track to return into the arc.

6. The sensor according to claim 5, wherein the resistive track is coplanar with the conductive tracks and also in electrical contact with the sensitive layer, the conductive track adjacent the resistive track being set to a ground voltage so that any current flowing in the sensitive layer between the resistive track and the adjacent conductive track does not disturb the current flowing between the conductive tracks.
